# EUROPEAN PATENT SPECIFICATION

(11) **EP 3 360 235 B1**
(45) Date of publication and mention of the grant of the patent: **30.12.2020**
(21) Application number: 16798378.2
(22) Date of filing: 06.10.2016
(51) Int. Cl.: H02K 1/16, H02K 3/12, H02K 3/14

(54) **STATOR FOR ELECTRIC MACHINE**
STATOR FÜR ELEKTRISCHE MASCHINE
STATOR POUR MACHINE ÉLECTRIQUE

(30) Priority: 08.10.2015 BG 11211015
(43) Date of publication of application: 15.08.2018
(73) Proprietor: Almott Ood, 6006 Stara Zagora (BG)
(72) Inventor: POPOV, Encho Nikolov, 1421 Sofia (BG)
(74) Representative: Vinarova, Emilia Zdravkova
(86) International application number: PCT/BG2016/000024
(87) International publication number: WO 2017/059503

(56) References cited:
- BG-A- 111 369
- DE-A1-102012 212 870
- GB-A- 189 861
- JP-A- S5 683 254
- US-A1- 2010 026 132
- US-A1- 2014 042 862

## Description

### FIELD OF THE INVENTION

The present invention relates to a stator for electric machine that is primarily intended to work as an alternator, motor generator, traction motor and generator for electric vehicles, electric motor for spindle drives and servo drives for machine tools with CNC, multipolar high-speed generator.

### PRIOR ART

It is known stator for electric machine [1] including cylindrical stator pack on the inner surface thereof a multitude of uniformly distributed slots covered by electric insulation and with an opening are formed. One or more double-layer windings are laid consisting of double-arm sections. The double-arm sections being formed by at least one elementary double-arm section made of wire with rectangular cross-section. The double-arm sections include an arm located to the opening, and an arm located to the bottom of the slot. The arm, located to the opening and the arm located to the bottom of each elementary double-arm section are laid in two slots distant from each other in step Y. In case of more than two elementary double-arm sections a part of the elementary double-arm sections has different size in a tangential direction of the cross-section of the wires. The shape of the slots is barrel-shaped following the widths of the wires of the double-arm sections. In case of a larger number of wires, the slots have a cross-section comprising two barrel-shaped forms, one above the other and joined together.

A disadvantage of the known stator is that because of the barrel shape of the slots, the increase in the cross-section of the wirers of the slots in the direction to the bottom is limited, whereby the reduction of electric and added losses in the stator winding is limited and so the increase of power of the electric machine is limited too.

Prior art includes also the following documents: US 2014/042862 A1; DE 10 2012 212870 A1; US 2010/026132 A1; GB 189 861 A; JP S56 83254 A

### SUMMARY OF THE INVENTION

An aim of the invention is to create a stator for electric machine with reduced electric and added losses and increased power.

This aim is solved by stator for an electric machine comprising a cylindrical stator pack, on the inner surface of which is formed a plurality of uniformly distributed slots. Each slot has a radially inward oriented opening and covered with electric insulation. Double-layer windings are laid in the slots. The double-layer windings are composed of double-arm sections. Each double-arm section comprises a covering elementary double-arm section and a covered elementary double-arm section.

The covering elementary double-arm section is made of a first wire with rectangular cross-section shaped as an open hair pin having a first and a second arm. The cross-section of the first wire is constant along its entire length.

The covered elementary double-arm section is made of a second wire with rectangular cross-section shaped as an open hair pin having a first and a second arm. The cross-section of the second wire is constant along its entire length.

The covering elementary double-arm section covers the covered elementary double-arm section in a manner that the first arm of the covering elementary double-arm section covers the first arm of the covered elementary double-arm section in radial inward direction.

The second arm of the covering elementary double-arm section covers the second arm of the covered elementary double-arm section in radial outward direction, so that the first and the second arm of the covered elementary double-arm section are radially disposed between the first and the second arm of the covering elementary double-arm section.

In order to form the double-layer windings of the stator, the double-arm sections are laid in the slots in a manner that in each slot the first arm of the covering elementary double-arm section and the second arm of the covered elementary double-arm section of one of the double-arm sections are disposed radially outward, while the second arm of the covered elementary double-arm section and the second arm of the covering elementary double-arm section of one other of the double-arm sections are disposed radially inward within the same slot.

According the invention all slots have a substantially identical rectangular cross-section in a plane perpendicular to the axis of rotation of the electric machine.

The rectangular cross-section of the first wire and the second wire substantially correspond to the width of the slots.

The cross-sectional area of the first wire within each slot is uniformly reduced in radial direction with respect to the cross-sectional area of the second wire in order to reduce the electric losses in the stator windings.

An advantage of the stator for electric machine according to the invention is that both the basic and added electric losses of the stator winding are reduced, and the power is increased without increasing the depth of the slots. This is due to the reduced dimension in the radial direction of the cross-section of the slot portion of the wire/wires located to an opening of a slot, which provides a strong reduction of the added electric losses in these wires, which are substantially larger. At that their increased resistance is compensated by increased dimensions in the radial direction of the wires located closer to the bottom of the slots, where the added electric losses are substantially smaller.

### BRIEF DESCRIPTION OF THE DRAWINGS

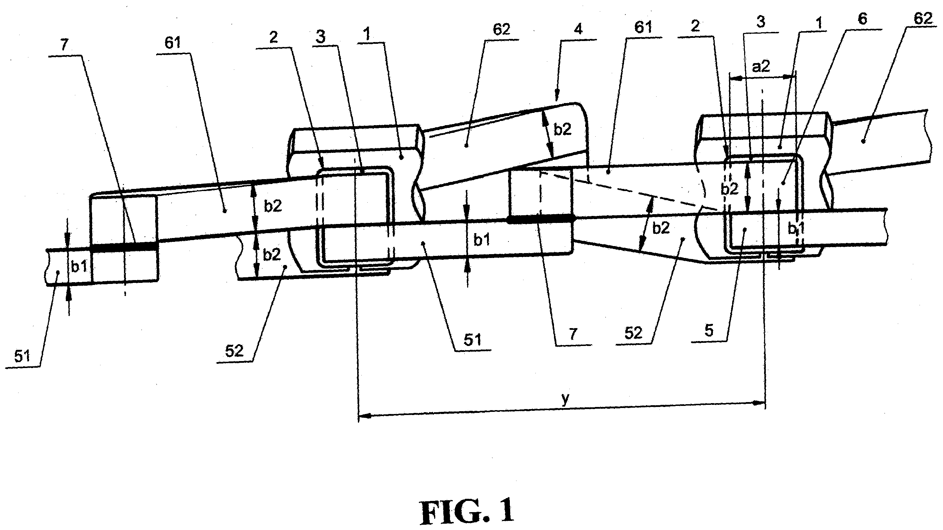

Fig.1 is a perspective view from the side of the soldered joints of the double-arm sections made up of one elementary double-arm section, shaped like a hairpin split open, with two partial cutouts of the stator pack, each comprising a slot with a rectangular cross-section, distant in step Y, in each slot were laid one arm at the side by opening of one double-arm section and one arm to the bottom of the next double-arm section.

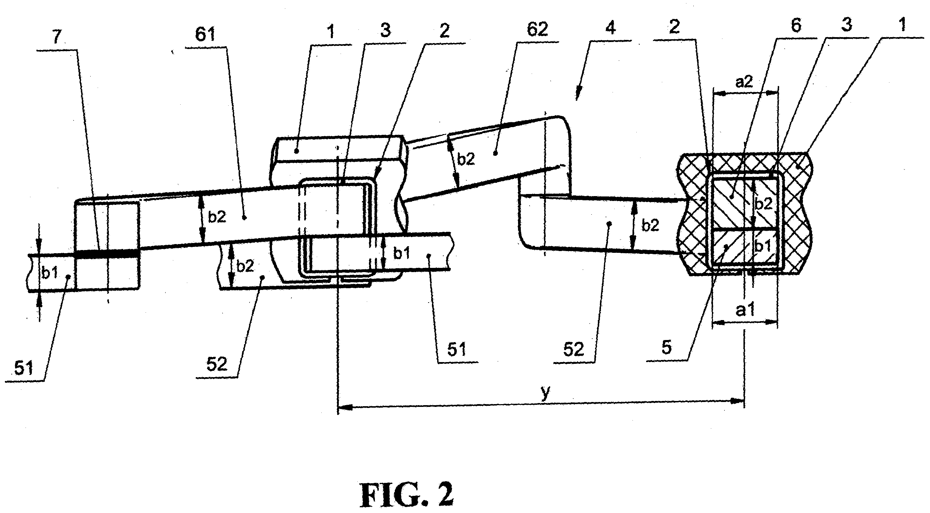

Fig. 2 is a view from the side of the soldered joints of the double-arm sections of the embodiment shown in FIG. 1, one cutout of the stator pack is shown as a cross-section through the cutout of the one slot with the wires laid therein.

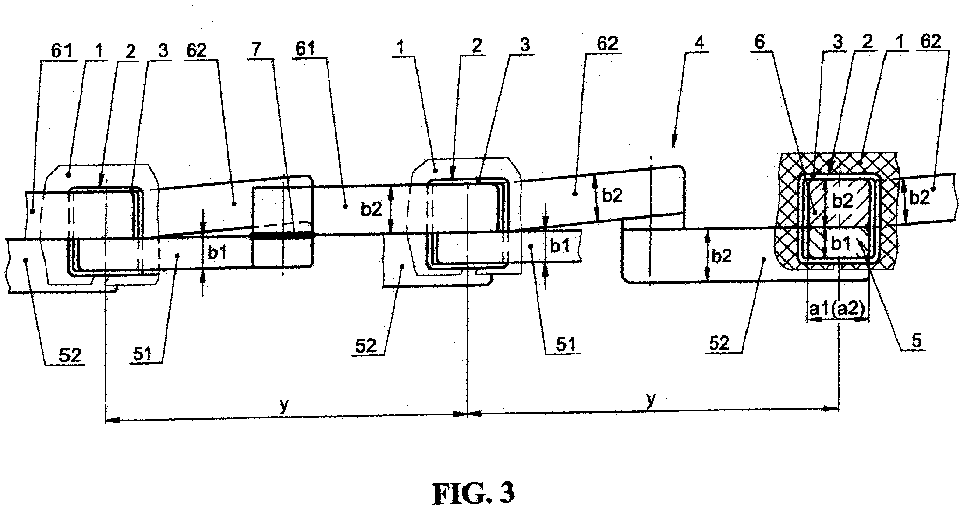

Fig.3 is a view from the side of the soldered joints of the double-arm sections in the embodiment shown in FIG. 1 and 2 with three partial cutouts of the stator pack, wherein the one cutout of the stator pack is shown as a cross-section through the one slot with the wires laid therein.

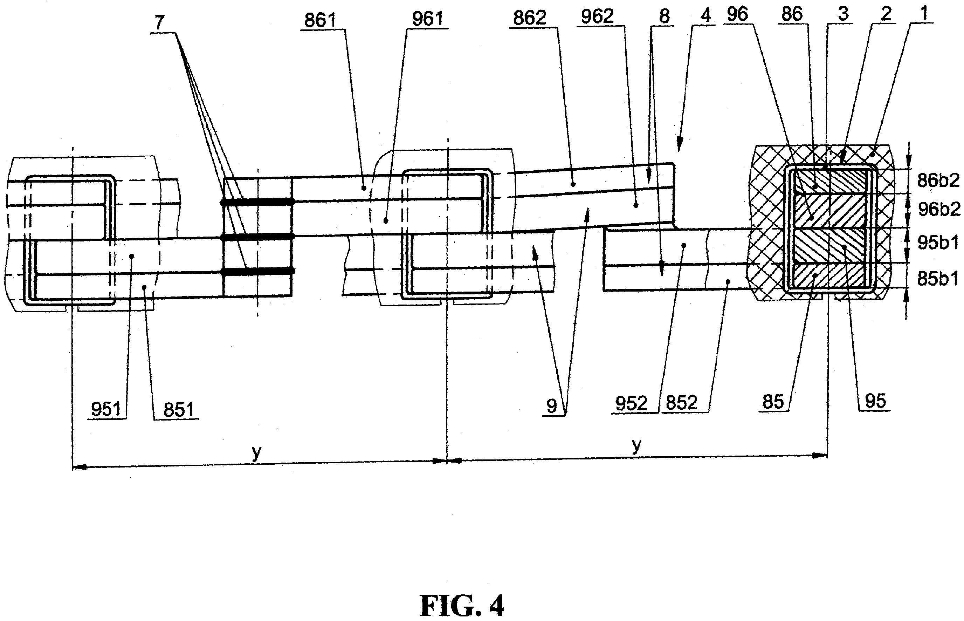

Fig.4 is a view from the side of the soldered joints of the double-arm sections made up of more than one elementary section, formed as hairpins split open, with three partial cutouts of the stator pack, one cutout of the stator pack is shown as a cross-section through the cutout of the one slot with the wires laid therein.

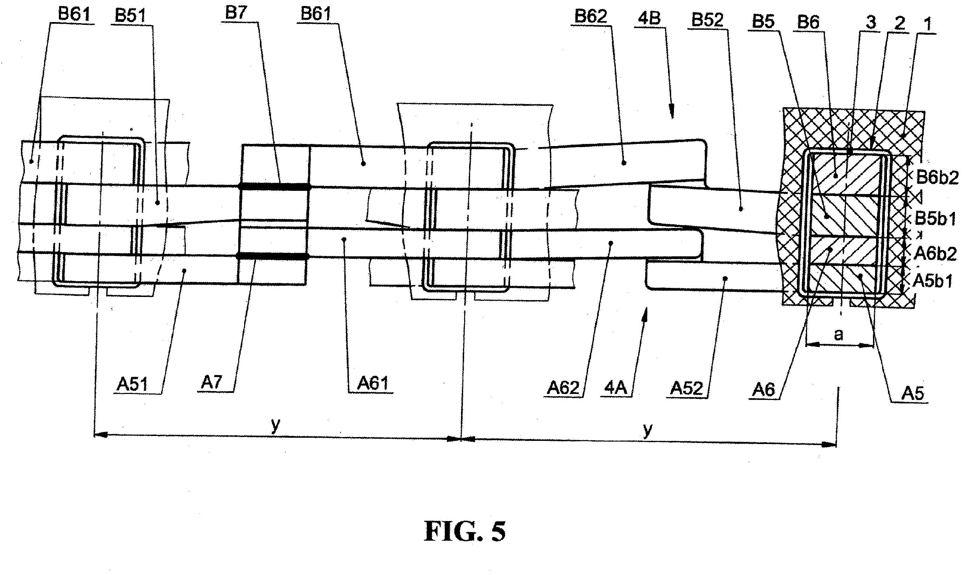

Fig.5 is a view from the side of the soldered joints of two windings from double-arm sections arranged one over the other, shaped like hairpins split open, with three partial cutouts of the stator pack, one cutout of the stator pack is shown as a cross-section through the cutout of the one slot with the wires laid therein.

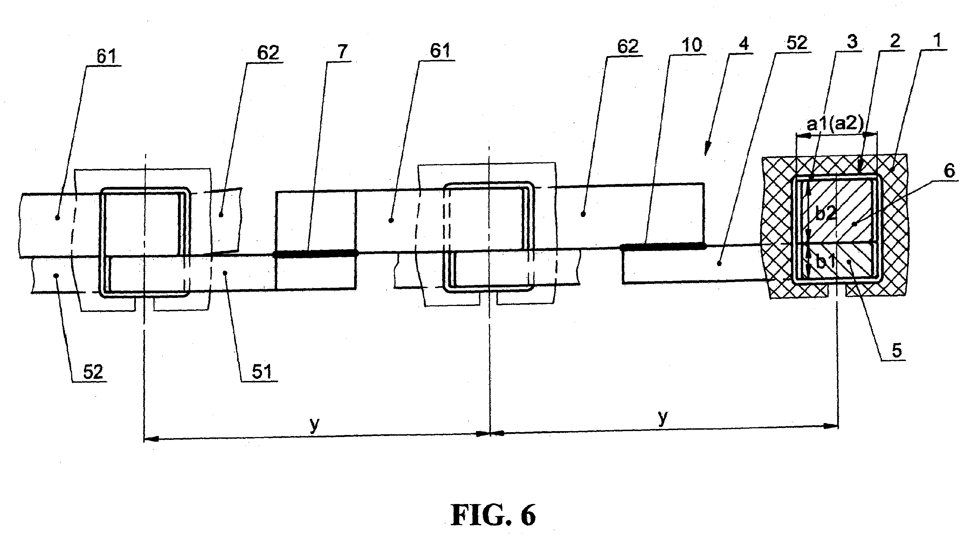

Fig.6 is a view from the side of the soldered joints of the double-arm sections made up of one elementary double-arm section, formed by soldered joint, with three partial cutouts of the stator pack, one cutout of the stator pack is shown as a cross-section through the cutout of the one slot with the wires laid therein.

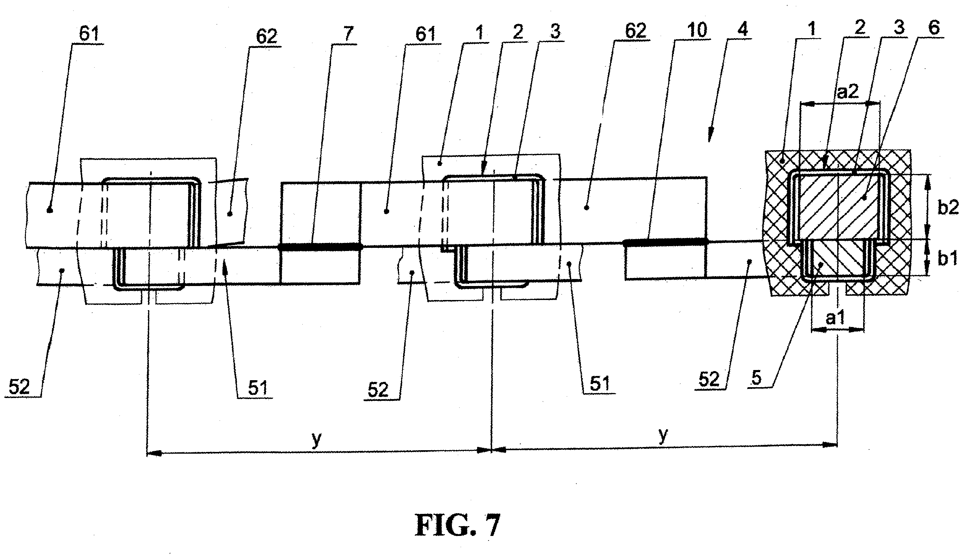

Fig.7 is a view from the side of the soldered joints of the double-arm sections made up of an elementary double-arm section each, formed by soldered joint, with three partial cutouts of the stator pack, one cutout of the stator pack is shown as a cross-section through the cutout of the one slot with the wires laid therein.

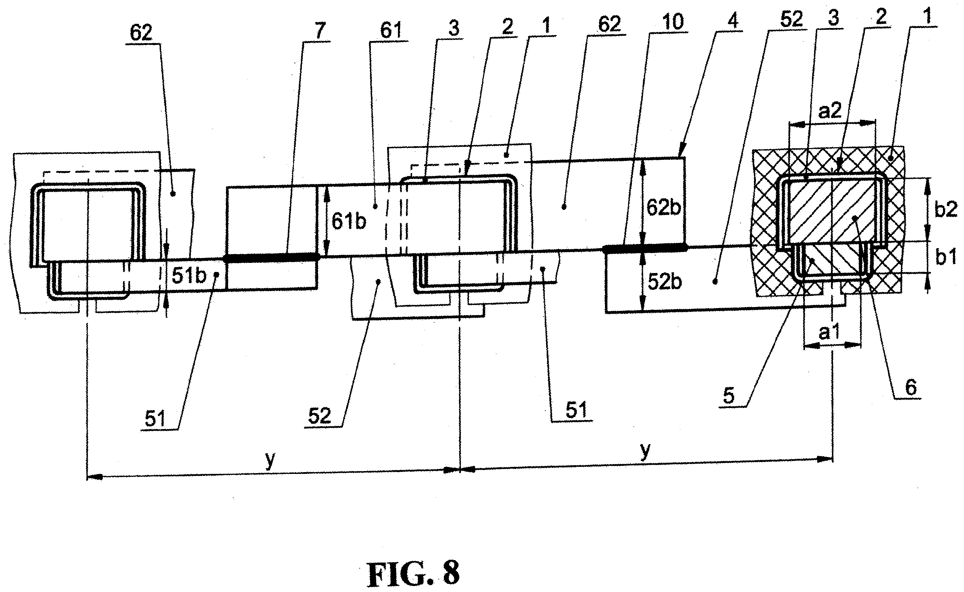

Fig.8 is a view from the side of the soldered joints of the double-arm sections made up of an elementary double-arm section each, formed by soldering, with three partial cutouts of the stator, one cutout of the stator pack is shown as a cross-section through the cutout of the one slot with the wires laid therein.

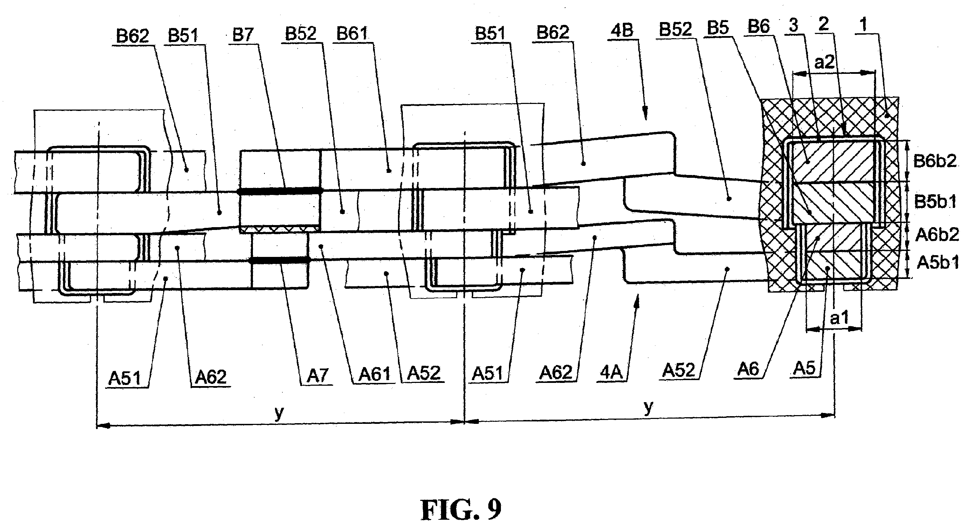

Fig.9 is a view from the side of the soldered joints of two windings from double-arm sections arranged one above the other, shaped like hairpins split open, with three partial cutouts of the stator pack, one cutout of the stator pack is shown as a cross-section through the cutout of the one slot with the wires laid therein.

### DETAILED DESCRIPTION OF EMBODIMENTS

On Fig.1 and Fig.2 a stator for electric machine according to the prior art is shown, comprising a cylindrical stator pack 1 made of electric sheets, on the inner surface of which is formed a plurality of uniformly distributed slots 2 with an opening and single rectangular cross-section. The slots 2 are covered with electric insulation 3. In each of the slots 2 is laid double-layer winding composed of double-arm sections 4. Each double-arm section 4 is composed of an elementary double-arm section, which is shaped as a hairpin split open from wire with a rectangular cross-section. The double-arm section 4 comprises an arm 5, adjacent to opening, and an arm 6 arranged to the bottom of the slot 2. The arm 5 adjacent to opening has a front end portion 51 and a rear end portion 52. The arm 6 positioned at the bottom of the slot 2 has a front end portion 61 and rear end portion 62. In the double-layer winding front end portions 51 and 61 of the double-arm sections 4 are soldered to one another by soldered joints 7. The arm 5 adjacent the opening of the slot, and the arm 6 positioned at the bottom of the slot of each elementary double-arm section 4 are laid in two slots 2, distant from each other in step Y. The size **al** in the tangential direction of the wire cross-section of the arm 5 and the size **a2** in the tangential direction of the wire cross-section of the arm 6 are equal. The size **bl** in the radial direction of the wire cross-section in the slot part and the front part 51 of the arm 5, adjacent an opening, is less than the size **b2** in the radial direction of the wire cross-section of the rear end parts 52 and 62, of the slot part of the rear arm 6 and of the front part 61.

The same embodiment is shown in Figure 3 and is characterized in that it shows three cutouts of the stator pack 1 around the slot 2, one cutout of the stator pack 1 is shown as a cross-section through the cutout of the one slot 2 with the wires laid therein.

Figure 4 shows an embodiment according to the invention. It differs from the embodiment shown in Figures 1, 2 and 3 in that the double-arm section 4 is comprised of more than one elementary double-arm sections: enveloping 8 and enveloped 9 formed as hairpins split open. The dimensions 85b1 and 86b2 in the radial direction of the cross-section of the arms wires of the enveloping elementary section 8 comprising the arm 85 adjacent an opening are smaller than the dimensions 96b1 and 96b2 in the radial direction of the cross-section of the arms wires 95 and 96 of enveloped elementary section 9. The dimensions in the radial direction of the cross-section of the wires of the enveloping 8 and enveloped 9 sections are equal in all their parts to the dimensions in the radial direction of the cross-section of wires in their slot parts. In the double-layer winding double-arm sections 4 are soldered to one another by soldered joints 7.

In the next embodiment of the prior art shown in Figure 5 are shown double-arm sections 4A and 4B, realized as hairpins split open, forming windings arranged one above the other. The dimensions in the radial direction A5b1 and A6b2 of the cross-sections of the wires composing the lying to the opening of the slot double-arm sections 4A are equal to each other and are smaller than the dimensions in the radial direction V5b1 and V6b2 of the cross-sections of the wires composing the lying to slot bottom double-arm sections 4B. The dimensions in the radial direction of the cross-section of the wires of the double-arm windings 4A and 4B in all their parts are equal to the dimensions in the radial direction of the cross-section of the wires in their slot parts. The double-arm sections 4A are joined in a winding by soldered joints A7. Double-arm sections 4B are joined in a winding by soldered joints B7. There is no difference among the dimensions of cross-sections of the wires in different parts of sections A. Also there is no difference among the dimensions of cross-sections of the wires in different parts of sections B.

The next embodiment of prior art shown in Figure 6, differs from the embodiment shown in FIG. 1, 2 and 3 in that the double-arm section 4 is formed by soldered joints 10 of the rear part 52 of the arm 5, situated next to the slot opening, and the rear part 62 of the arm 6 positioned at the slot bottom and in that the dimensions of the wire cross-section of the arm 5 in all its parts are identical with each other, and the dimensions of the wire cross-section of the arm 6 in all its parts are identical with each other. The size **bl** in the radial direction of the wire cross-section of the arm 5 is less than the size **b2** in the radial direction of the wire cross-section of the arm 6. In the double-layer winding front end parts 51 and 61 of the double-arm sections 4 are soldered by soldered joints 7.

In Figure 7 is shown a further embodiment of the prior art, which differs from the embodiment shown in FIG. 6 in that the cross-section of the slot 2 is a two-stage rectangular section, formed of two rectangular parts with different widths which are connected to one another and are arranged one above the other. The opening of the slot 2 is located in the part with a smaller width. In the slots 2 is laid a double-layer winding built of soldered double-arm sections 4. The rear part 52 of the arm 5 and 62 of the arm 6 are soldered to one another by soldered joints 10. The arm 6 has a greater width **a2** of the cross-section of the wire and situated in the part of the slot 2 with a greater width to slot bottom. The arm 5 adjacent the opening has a smaller width **al** of the wire cross-section and is placed in a part with a smaller width to the opening of the slot 2. Size **bl** in the radial direction of the wire cross-section of the arm 5, situated to slot opening is smaller than the size **b2** in the radial direction of the wire cross-section of the arm 6 to slot bottom. The dimensions of the cross-sections of the parts of the arm 5 are equal to each other. The dimensions of the cross-sections of the parts of the arm 6 are equal to each other. The arms of the double-arm sections 4 are distant from each other in step Y. Double-arm sections 4 were joined in a winding through soldered joints 7 between their front end parts.

The further exemplary embodiment of prior art shown in Figure 8, differs from the embodiment shown in FIG. 7, in that the size 52b in the radial direction of the wire cross-section of the rear end part 52 of arm 5 is greater than the size of arm 5 in the radial direction of the cross-section of the wires of its slot part **bl** and its front end part 51b. Also, the size 62b in the radial direction of the wire cross-section of the rear end part 62 of the arm 6 is greater than the dimensions of its slot part b2i and of its front end part 61b.

The next exemplary embodiment of prior art shown in Figure 9, is analogous to the embodiment shown in FIG. 5, and differs from it in that the rectangular cross-section of the slots 2 is two-stage and is formed of two rectangular parts of different widths, joined to one another and arranged one above another, the narrower parts of the slots 2 are next to the openings. The size **a2** in the tangential direction of the cross-section of the wires of the arms of the sections 4B is larger than the size **al** in the tangential direction of the wires cross-section of the arms of the sections 4A. The dimensions A5b1 and A6b2 in the radial direction of the cross-section of the arms of the sections 4A are equal to each other and are smaller than the dimensions B5b1 and B6b2 in a radial direction of the wires cross-section of the arms of the sections 4B, which are also equal to each other. Sections 4A are joined in a winding by soldered joints A7. Sections 4B are joined in a winding by soldered joints B7.

### USE OF THE INVENTION

The stator for electric machine according to the invention is used mounted in the electric machine comprising a rotor mounted on a shaft. The drive shaft is sustained by bearings in front and rear end bells. By current flowing in the stator winding, the magnetic field created by this current, reacts with an existing or created magnetic field of the rotor, with the result that torque arises. By the reduction of size **b** in the radial direction of the cross-section of the one or more wires arranged to the openings of the slots 2 are reduced also the generated added electric losses by leakage alternating magnetic field in the slots 2, running through the wires, which is most intensive in the area near to the openings of the slots 2. At the same time, the increase in basic electric losses due to increased active resistance of the wires with reduced dimensions **bl** of their cross-sections is offset by reduced active resistance of the other wires in the slots 2 due to the larger dimensions **b2** in the radial direction of their cross-sections. As a result, the value of the added electric losses is reduced. The value of basic electric losses in the winding as a whole is maintained or reduced. As a result of application of the invention, the total electric losses are reduced and the power of the electric machine is increased.

### EXPERIMENTAL RESULTS RECEIVED DURING EXPERIMENTATION OF THE INVENTION

According to the invention was developed a version of an existing virtual competitive model of an existing stator of electric machine with the following characteristic data: number of wires in the slot 2, dimensions of the cross-section of the wires 2,5x4,5 mm., number of slots 72 and number of poles 12, length of the stator pack 55 mm. The comparison is made for speed 6000 RPM.

The virtual sample according to developed version has stator pack fully equal in size to the stator pack of the existing model. The dimensions of the cross-sections of the wires in the virtual sample are modified as follows: dimensions of the cross-section of the wires to the slot opening: 2,5 x 3,5 mm, dimensions of the cross-section of the wires to the slot bottom: 2,5x5,5 mm. The amount of basic and added electric losses of the virtual sample is reduced by 25% compared to the amount of basic and added electric losses of the existing model.

### REFERENCE:

1. Bulgarian Patent Application No 111369
2. US 2014/042862 A1
3. DE 10 2012 212870 A1
4. US 2010/026132 A1
5. GB 189 861 A
6. JP S56 83254 A

## Claims

1. Stator for an electric machine comprising a cylindrical stator pack (1), on the inner surface of which is formed a plurality of uniformly distributed slots (2), each slot (2) having a radially inward oriented opening and covered with electric insulation (3), wherein double-layer windings are laid in the slots (2), wherein the double-layer windings are composed of double-arm sections (4), each double-arm section (4) comprising a covering elementary double-arm section (8) and a covered elementary double-arm section (9), wherein
• the covering elementary double-arm section (8) is made of a first wire (85, 86) with rectangular cross-section shaped as an open hair pin having a first (862) and a second arm (852), wherein the cross-section of the first wire (85, 86) is constant along its entire length, wherein
• the covered elementary double-arm section (9) is made of a second wire (95, 96) with rectangular cross-section shaped as an open hair pin having a first (962) and a second arm (952), wherein the cross-section of the second wire (95, 96) is constant along its entire length, wherein
• the covering elementary double-arm section (8) covers the covered elementary double-arm section (9) in a manner that the first arm (862) of the covering elementary double-arm section (8) covers the first arm (962) of the covered elementary double-arm section (9) in radial inward direction and
• the second arm (852) of the covering elementary double-arm section (8) covers the second arm (952) of the covered elementary double-arm section (9) in radial outward direction, so that the first and the second arm (962, 952) of the covered elementary double-arm section (9) are radially disposed between the first and the second arm (862, 852) of the covering elementary double-arm section (8), wherein
• in order to form the double-layer windings of the stator, the double-arm sections (4) are laid in the slots in a manner that in each slot (2) the first arm (862) of the covering elementary double-arm section (8) and the second arm (962) of the covered elementary double-arm section (9) of one of the double-arm sections (4) are disposed radially outward, while the second arm (952) of the covered elementary double-arm section (9) and the second arm (952) of the covering elementary double-arm section (8) of one other of the double-arm sections (4) are disposed radially inward within the same slot (2),
**characterised in that**
• all slots (2) have a substantially identical rectangular cross-section in a plane perpendicular to the axis of rotation of the electric machine, wherein
• the rectangular cross-section of the first wire (85, 86) and the second wire (95, 96) substantially correspond to the width of the slots (2), wherein
• the cross-sectional area of the first wire (85, 86) within each slot is uniformly reduced in redial direction with respect to the cross-sectional area of the second wire (95, 96) in order to reduce the electric losses in the stator windings.

## Patentansprüche

1. Ein Stator für eine elektrische Maschine, bestehend aus einem zylindrischen Statorpaket (1), an dessen Innenfläche eine Vielzahl von gleichmäßig verteilten Kanälen (2) gestaltet sind, wobei jeder Kanal (2) eine radial nach innen orientierte, mit Elektroisolation (3) bedeckte Öffnung hat, wobei sich in den Kanälen zweischichtige Wicklungen (2) befinden, die aus zweiarmigen Abschnitten (4) bestehen, wobei jeder zweiarmige Abschnitt (4) aus einem abdeckenden einfachen zweiarmigen Abschnitt (8) und einem abgedeckten einfachen zweiarmigen Abschnitt (9) besteht;
• der abdeckende einfache Zweiarmabschnitt (8) ist aus einem Draht (85, 86) mit einem rechteckigen Querschnitt, geformt wie eine offene Haarnadel mit einem ersten (862) und einem zweiten Arm (852), hergestellt, wobei der Querschnitt des Drahtes (85, 86) derselbe über seine gesamte Länge ist;
• der abgedeckte einfache Zweiarmabschnitt (9) ist aus einem zweiten Draht (95, 96) mit einem rechteckigen Querschnitt, geformt wie eine offene Haarnadel mit einem ersten (962) und einem zweiten Arm (952), hergestellt, wobei der Querschnitt des zweiten Drahtes (95, 96) derselbe über seine gesamte Länge ist;
• deckt der abdeckende einfache Zweiarmabschnitt (8) den abgedeckten einfachen Zweiarmabschnitt (9) auf solche Weise, dass der erste Arm (862) des abdeckenden einfachen Zweiarmabschnitts (8) den ersten Arm (962) des abgedeckten einfachen Zweiarmabschnitts (9) radial nach innen deckt;
• der zweite Arm (852) des abdeckenden einfachen Zweiarmabschnitts (8) bedeckt den zweiten Arm (952) des abgedeckten einfachen Zweiarmabschnitts (9) radial nach außen auf solche Weise, dass der erste und der zweite Arm (962, 952) des abdeckenden einfachen Zweiarmabschnitts (9) radial zwischen dem ersten und dem zweiten Arm (862, 852) des abdeckenden einfachen Zweiarmabschnitts (8) liegen;
• damit die zweischichtigen Statorwicklungen gebildet werden, werden die Zweiarmabschnitte (4) so in den Kanälen verlegt, dass in jedem Kanal (2) der erste Arm (862) des abdeckenden einfachen Zweiarmabschnitts (8) und der zweite Arm (962) des bedeckten einfachen Zweiarmabschnitts (9) des einen von den Zweiarmabschnitten (4) radial nach außen verlegt sind, und der zweite Arm (952) des deckenden einfachen Zweiarmabschnitts (9) und der zweite Arm (952) des bedeckten einfachen Zweiarmabschnitts (8) des anderen von den Zweiarmabschnitten (4) radialer nach innen in demselben Kanal (2) verlegt sind; was **gekennzeichnet durch** die Tatsache ist, dass
• alle Kanäle (2) den gleichen rechteckigen Querschnitt haben und in einer Ebene senkrecht zur Drehachse der elektrischen Maschine liegen;
• der rechteckige Querschnitt des ersten Drahts (85, 86) und des zweiten Drahts (95, 96) entsprechen der Breite der Kanäle (2), wobei;
• der Querschnitt des ersten Drahts (85, 86) in jedem Kanal wird in radialer Richtung in Bezug auf die Querschnittsfläche des zweiten Drahts (95, 96) gleichmäßig reduziert, damit die elektrischen Verluste in den Statorwicklungen verringert werden.

## Revendications

1. Stator de machine électrique composé par un paquet cylindrique de stator (1) sur la surface intérieur duquel sont formés plusieurs canaux distribués de manière uniforme (2), sur chaque canal (2) étant situé un orifice orienté radialement couvert d'isolation électrique (3), dans les canaux étant mis des bobinages à deux couches (2) qui sont composées de deux sections à double bras (4), chaque section à double bras (4) étant composée d'une section à double bras élémentaire couvrante (8) et d'une section à double bras élémentaire couverte (9), donc
• la section à double bras élémentaire couvrante (8) est fabriquée d'un premier conducteur (85, 86) à section transversale rectangulaire ayant la forme d'une épingle à cheveux ouverte avec un premier (862) et deuxième bras (852), la section du premier conducteur (85, 86) étant la même par toute sa longueur, où
• la section à double bras élémentaire couverte (9) est fabriquée d'un deuxième conducteur (95, 96) à section transversale rectangulaire ayant la forme d'une épingle à cheveux ouverte avec un premier (962) et deuxième bras (952), la section du deuxième conducteur (95, 96) étant la même par toute sa longueur, où
• la section à double bras élémentaire couvrante (8) couvre la section à double bras élémentaire couverte (9) de façon à ce que le premier bras (862) de la section à double bras élémentaire couvrante (8) couvre le premier bras (962) de la section à double bras élémentaire couverte (9) en direction radiale et
• le deuxième bras (852) de la section à double bras élémentaire couvrante (8) couvre le deuxième bras (952) de la section à double bras élémentaire couverte (9) en direction radiale vers l'extérieur de façon à ce que le premier et le deuxième bras (962, 952) de la section à double bras élémentaire couverte (9) soient disposées radialement entre le premier et le deuxième bras (862, 852) de la section à double bras élémentaire couvrante (8), où
• afin de donner la forme des bobinages à deux couches du stator, les sections à double bras (4) sont posées dans les canaux de façon à ce que dans chaque canal (2) le premier bras (862) de la section à double bras élémentaire couvrante (8) et le deuxième bras (962) de la section à double bras élémentaire couverte (9) de l'une des sections à double bras (4) soient disposées en direction radiale vers l'extérieur et le deuxième bras (952) de la section à double bras élémentaire couverte (9) et le deuxième bras (952) de la section à double bras élémentaire couvrante (8) de l'autre des sections à double bras (4) soient disposées en direction radiale vers l'intérieur dans le même canal (2),
se caractérisant du suivant
• tous les canaux (2) ont une section transversale rectangulaire identique et sont situés dans un plan perpendiculaire à l'axe de rotation de la machine électrique, où
• la section transversale rectangulaire du premier fil conducteur (85, 86) et du deuxième conducteur (95, 96) correspondent à la largeur des canaux (2), où
• la section transversale du premier conducteur (85, 86) dans chaque canal est réduite de manière uniforme en direction radiale par rapport à la surface de la section transversale du deuxième conducteur (95, 96) afin de réduire les pertes électriques dans les bobinages du stator.
